**Europäisches Patentamt**

**European Patent Office**

**Office européen des brevets**

(11) Veröffentlichungsnummer : **0 096 357**
**B1**

(12) **EUROPÄISCHE PATENTSCHRIFT**

(45) Veröffentlichungstag der Patentschrift :
20.08.86

(21) Anmeldenummer : **83105417.6**

(22) Anmeldetag : **01.06.83**

(51) Int. Cl.⁴ : **G 03 D 15/04, G 03 B 42/04**

(54) Vorrichtung zum Entnehmen eines Filmstreifens aus einer schlauchförmigen, flachen Verpackung.

(30) Priorität : **04.06.82 DE 3221220**

(43) Veröffentlichungstag der Anmeldung :
**21.12.83 Patentblatt 83/51**

(45) Bekanntmachung des Hinweises auf die Patenterteilung : **20.08.86 Patentblatt 86/34**

(84) Benannte Vertragsstaaten :
**CH FR GB IT LI SE**

(56) Entgegenhaltungen :
DE-A- 2 246 690
DE-A- 2 336 028
DE-A- 2 450 684
DE-A- 2 741 861
DE-A- 2 923 992
DE-B- 2 065 940
DE-C-  690 226
US-A- 3 971 279

(73) Patentinhaber : **AGFA-GEVAERT Aktiengesellschaft**
**D-5090 Leverkusen 1 (DE)**

(72) Erfinder : **Becherer, Walter**
**Franz-Gruber-Strasse 4**
**D-8000 München 83 (DE)**
Erfinder : **Geyken, Erwin**
**Brunhildenstrasse 4**
**D-8014 Neubiberg (DE)**
Erfinder : **Jelinek, Nikolaus**
**Kranzhornstrasse 11**
**D-8000 München 82 (DE)**
Erfinder : **Schausberger, Helmut**
**Walchenseeplatz 19**
**D-8000 München 90 (DE)**
Erfinder : **Lechner, Franz**
**Kirchplatz 7**
**D-8018 Grafing (DE)**

**Beschreibung**

Die Erfindung betrifft eine Vorrichtung zum Entnehmen eines Filmstreifens aus einer schlauchförmigen, flachen Verpackung, in welcher sich ggf. außerdem eine oder mehrere Folien in Größe des Filmstreifens befinden.

Die Filmstreifen der eingangs genannten Art sind gewöhnlich in Papier- oder Kunststoffhüllen untergebracht, wobei die Hülle den Film verhältnismäßig eng umschließt. Derartiges Filmmaterial wird gewöhnlich für Röntgenaufnahmen, insbesondere für industrielle Zwecke, verwendet. Dabei wird zum Zwecke der Aufnahme von einer großen Vorratsspule ein Streifen gewünschter Länge abgeschnitten, wobei je nach Aufnahmezweck Längen zwischen 0,5 m und 50 m vorkommen können. Nach der Aufnahme wird der Film in einer Dunkelkammer aus der Verpackungshülle entnommen, wobei diese aufgeschnitten werden muß. Die schlauchförmige Verpackungshülle ist an den beiden Rändern scharf gefaltet und der Film ruht mit seinen Rändern in diesen beiden Falten. Dies ist von großer Bedeutung, da bei vielen Aufnahmen der Film bis unmittelbar an das Objekt heranreichen muß. Durch diese verhältnismäßig enge Umhüllung des Filmes durch die Verpackung läßt sich der Film zum Zwecke der Entnahme kaum aus einem der offenen Enden aus der Hülle ziehen. Daher ist es im allgemeinen üblich, daß die Hülle in der Dunkelkammer von Hand aufgeschnitten und der Film entnommen wird.

Aufgabe der Erfindung ist es daher, eine Vorrichtung der eingangs genannten Art zu schaffen, mit der die Filmentnahme unter Schonung des Filmes erleichtert ist.

Diese Aufgabe wird durch die im Kennzeichen des Anspruchs 1 aufgeführten Mittel gelöst.

Mit der Erfindung wird erreicht, daß der Film berührungsfrei aus der Verpackung entnommen werden kann, womit insbesondere Druckbelichtungen vermieden sind. Durch entsprechende Ausgestaltung der Schneideinrichtung können auch Verpackungen verschiedener Breite geöffnet werden.

In vielen Fällen sind innerhalb der Verpackung beiderseits des Filmes Bleischutzfolien vorgesehen. Während das Verpackungsmaterial nach dem Aufschneiden unbrauchbar geworden ist, sollen dagegen die Bleischutzfolien zum Zwecke der Wiederverwendung gesammelt werden. Zu diesem Zweck wird in einer Ausgestaltung der Erfindung vorgeschlagen, zunächst die Verpackung von Film und Bleischutzfolien zu trennen und sodann die Folien getrennt vom Film zu sammeln.

Weitere Einzelheiten und Vorteile der Erfindung ergeben sich aus den Unteransprüchen im Zusammenhang mit der Beschreibung eines Ausführungsbeispieles, das anhand von Figuren eingehend erläutert wird. Es zeigen :

Figur 1 eine schematische Ansicht der erfindungsgemäßen Vorrichtung ;

Figur 2 eine Seitenansicht einer in Figur 1 dargestellten Führungszunge mit daran angeordneter Schneideinrichtung in größerem Maßstab ;

Figur 3 einen Querschnitt durch Verpackung und Führungszungen in größerem Maßstab.

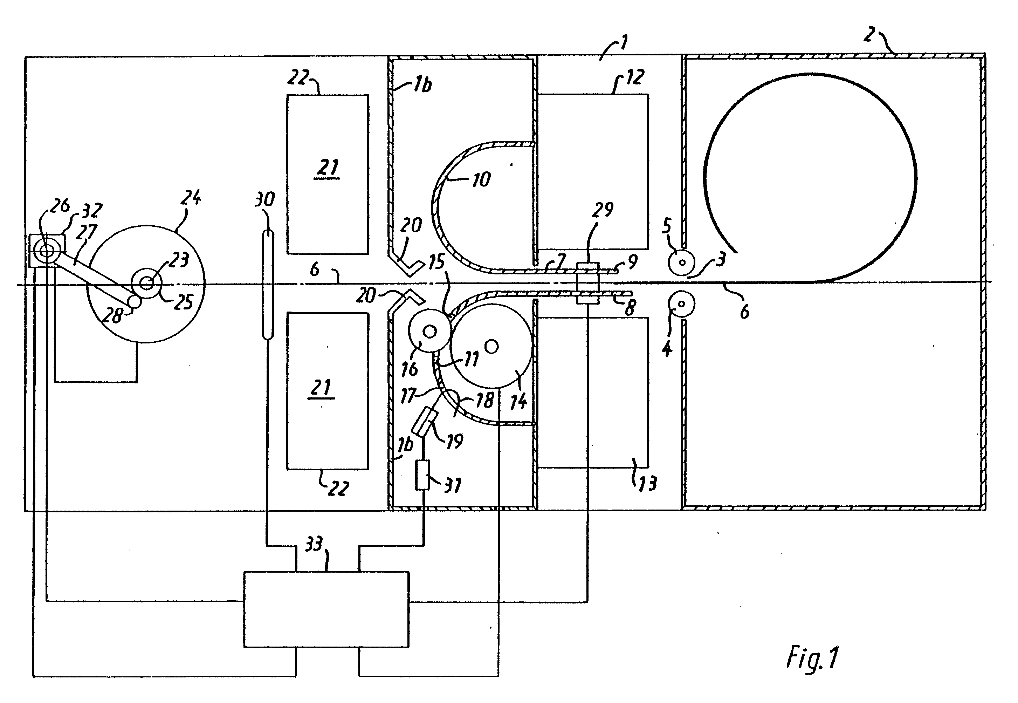

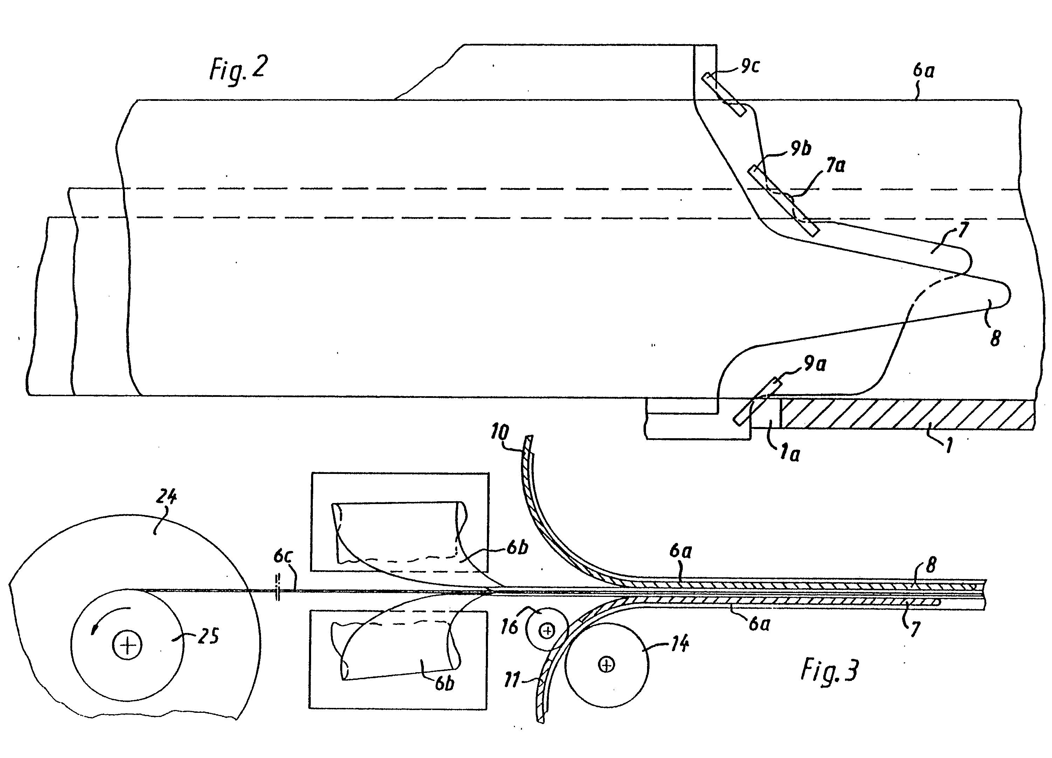

In Figur 1 ist mit 1 ein horizontaler Arbeitstisch bezeichnet, auf welchem ein Einlegbehälter 2 angeordnet ist. An dem Einlegbehälter 2 ist eine Ausnehmung 3 vorgesehen, welche von zwei Rollen 4 und 5 begrenzt wird, die in einem Abstand zueinander mit vertikaler Achse angeordnet sind. Zwischen den Rollen 4 und 5, die lediglich als Anlagerollen dienen, wird ein in einer Verpackung 6 befindliches Schichtträgermaterial 6c (Fig. 3) mit zwei das Schichtträgermaterial sandwichartig umgebenden Bleifolien hindurchgeführt. Außerhalb des Behälters 2 sind zwei zueinander parallele Führungszungen 7 und 8 angeordnet, deren vordere Enden zu den Rollen 4 und 5 weisen. Die Führungszungen 7 und 8 sind versetzt angeordnet, so daß das Vorderteil der Führungszunge 8 näher an den Rollen 4 und 5 liegt, als das der Führungszunge 7. Am Vorderteil der Führungszunge 7 ist eine Schneideinrichtung 9 angeordnet, welche im einzelnen aus Figur 2 hervorgeht. An den Enden der beiden Führungszungen 7 und 8 schließen sich um eine im wesentlichen vertikale Achse halbkreisförmig gebogene Führungs-elemente 10 bzw. 11 an, welche über einem Auffangbehälter 12 bzw. 13 enden. In der Biegung des einen Führungselementes 11 ist eine Rolle 14 mit ebenfalls vertikaler Achse angeordnet. Der Durchmesser der Rolle 14 entspricht etwa dem Innendurchmesser des gebogenen Führungselementes 11, so daß ein an dem Führungselement anliegendes bzw. um die Rolle 14 geführtes Band etwa den gleichen Weg durchlaufen würde. Das Führungselement 11 weist im Bereich der Rolle 14 eine Ausnehmung 15 auf, durch welche eine Andruckrolle 16 hindurchragt und an der Rolle 14 anliegt. Zwischen der Ausnehmung 15 und dem Ende des Führungselementes 11 ist eine weitere Ausnehmung 17 vorgesehen, durch welche eine Fahne 18 eines Mikroschalters 19 ragt.

In Transportrichtung des Filmpacks 6 gesehen hinter den Führungselementen 10 und 11 sind beiderseits der Bahn Führungswände 20 angeordnet. Hinter den Führungswänden 20 befinden sich beiderseits der Transportbahn Ausnehmungen 22 im Arbeitstisch 1, unter welchen Auffangbehälter 21 für die Bleifolien eingesetzt sind. Schließlich endet die Führungsbahn an einem Spulenflansch 24 mit einem Kern 23, auf welchen eine Spule 25 aufsteckbar ist. Ein um eine Achse 26 drehbar gelagerter Hebel 27 besitzt an seinem freien Ende eine Andruckrolle 28, welche an der Spule 25 federnd anliegt.

Zur Steuerung der Vorrichtung sind neben dem Mikroschalter 19 unterhalb der Führungszungen 7 und 8 ein das Vorhandensein eines Filmpacks erkennender Schalter 29 angeordnet, der mit einer Steuereinheit 33 verbunden ist. Quer zur Führungsbahn in unmittelbarer Nähe zur Spule 24 ist ein ebenfalls das Vorhandensein eines Film erkennender Schalter 30 vorgesehen, der auch mit der Steuereinheit 33 verbunden ist. Der Mikroschalter 19 ist schließlich über ein Zeitglied 31 mit der Steuereinheit 33 verbunden. Die Steuereinheit 33 ist ihrerseits mit einem nicht dargestellten Antrieb der Rolle 14 sowie einer Geschwindigkeitssteuerung 32 für den ebenfalls nicht dargestellten Antrieb des Spulenflansches 24 verbunden. Nachden der Hebel 27 außerdem eine Schaltfunktion ausübt, steht diese mit der Steuereinheit 33 in Verbindung.

Aus Figur 2 ist in größerem Maßstab die Ausbildung der Führungszungen 7 und 8 ersichtlich. Die vorne gelegene Führungszunge 8 weist eine abgerundete, sich in Richtung zur Aufwickelspule 24 allmählich erweiternde Spitze auf, welche auch bei der hinteren Führungszunge 7 vorhanden ist, sich jedoch in schnellerem Maße erweitert. Die Zunge 7 verbreitert sich in einem geschwungenen Bogen rasch bis zum Arbeitstisch 1, verläuft zu diesem ein Stück parallel und vollführt dann eine Biegung um 90° in eine Ausnehmung 1a des Arbeitstisches hinein. In der Biegung ist diese überquerend ein Messer 9a angeordnet, das einen Winkel von etwa 35 bis 45° zur Arbeitsplatte einnimmt. Von dem Vorderteil der Führungszunge 7 führt nach oben erst eine wenig ansteigende Kante, sodann mehrere Stufen, im vorliegenden Fall drei Stufen 7a. Während zwei Stufen nahe beieinander liegen, ist die dritte Stufe etwas entfernt. Die ersten beiden Stufen werden von einem Messer 9b überquert und die letzte Stufe von einem Messer 9c. Die Richtung der Messer 9b und 9c sind etwa spiegelbildlich zur Richtung des Messers 9a angeordnet und weisen in einem Winkel gegen die Transportrichtung der Verpackung 6a. Alle Messer 9a bis 9c bilden zusammen mit den Stufen die Schneideinrichtung 9.

Im Betrieb wird nun das zu entwickelnde Material zwecks Filmentnahme in den Behälter 2 gegeben und ein Ende zwischen den Rollen 4 und 5 hindurchgeführt und, sofern der Führungsrand verschlossen ist, das verschließende Klebeband abgenommen bzw. abgeschnitten. Der nun offene Verpackungsschlauch wird von Hand über die Führungszungen 7 und 8 geschoben, derart, daß der Film zwischen den Zungen und die beiden Seiten des Verpackungsschlauches außerhalb der Zungen liegen. Wenn der Film zwischen zwei Bleifolien geführt ist, so werden auch diese zwischen die Zungen eingefädelt. Von Hand wird der Schlauch nun in Richtung Aufwickelspule geschoben, wobei das Messer 9a auf der Unterseite und eines der Messer 9b oder 9c auf der Oberseite in den gefalteten Rand des Verpackungsschlauches 6a einschneiden bzw. diesen in der Falte aufschlitzen. Mit dem weiteren Voranschieben des Verpackungsschlauches gelangt schließlich die eine Seite des Schlauches zwischen die Rollen 14 und 16. Mit dem Schieben des Schlauches wurde der Schalter 29 betätigt, welcher über die Steuereinheit 33 den Antrieb für die Rolle 14 sowie den Spulenflansch 24 anschaltet. Sobald die Rollen 14 und 16 die eine Verpackungswand ergriffen haben, ziehen diese daran und damit an dem gesamten Verpackungsschlauch, so lange, bis der Verpackungsstreifen die Fahne 18 des Mikroschalters 19 trifft. Dieser schaltet mit einer Zeitverzögerung über das Zeitglied 31 den Antrieb der Spule 24 und der Rolle 14 wieder ab, wobei die Zeitverzögerung so bemessen ist, daß der Filmanfang die Spule gerade erreicht, der Transport zum Zwecke des Einfädelns des Filmes an der Spule jedoch unterbrochen wird. Nach dem Anbringen des Filmanfangs an der Spule 25 wird der Hebel 27 in die dargestellte Stellung umgelegt, wodurch der mit dem Hebel 27 in Verbindung stehende Schalter in der Geschwindigkeitssteuerung 32 über die Steuereinheit 33 den Antrieb der Spule und der Rolle 14 wieder anschaltet.

Mit definierter Andruckskraft wird der Film auf die Spule 25 aufgewickelt, wobei die Geschwindigkeitssteuerung 32 mit größer werdendem Wickel die Geschwindigkeit des Antriebs zurücksetzt und damit die Transportgeschwindigkeit der Rolle 14 und die Aufwickelgeschwindigkeit miteinander synchronisiert. Sobald das Filmende den Schalter 30 freigibt, schaltet dieser den Antrieb des Spulenflansches 24 über die Steuereinheit 33 wieder aus. Die Spule kann nun durch Abschwenken des Hebels 27 von dem Kern 23 entnommen und der Entwicklung zugeführt werden. Es ist aber auch möglich, an das Filmende ein nächstes Filmstück anzuhängen und dieses auf die gleiche Spule aufzuwickeln.

In Figur 3 ist der Trennvorgang ebenfalls in vergrößertem Maßstab dargestellt, wobei außerhalb der Führungszungen 7 und 8 die oben und unten voneinander getrennten Verpackungsseiten 6a in die Biegungen der Führungselemente 10 bzw. 11 laufen, von diesen umgebogen und in die Behälter 12 bzw. 13 gelenkt werden (Figur 1). Zwischen den Führungszungen 7 und 8 verbleiben die beiden Bleifolien 6b, welche den Film 6c zwischen sich halten (Figur 3). Durch ihr Eigengewicht fallen die Bleifolien nach dem Durchtreten der Führungswände 20 (Figur 1) nach beiden Seiten von dem vertikal geführten Film 6c ab und werden in den Behältern 21 gesammelt. Der Film 6c wird schließlich auf der Spule 25 am Spulenflansch 24 aufgewickelt.

In Figur 2 ist gezeigt, daß die beschriebene Vorrichtung beispielsweise für drei verschiedene der genormten Packungsbreiten ausgebildet ist, nämlich für 60, 70 und 100 mm. Während die beiden kleineren Formate von den Messern 9a und 9b geschnitten werden, wird das große Format von den Messern 9a und 9c geschnitten. Selbstverständlich lassen sich für unterschiedliche Verpackungsgrößen auch andere Ausbildungen der Schneideinrichtung 9 vorsehen.

Bei der Erfindung wird der Film von der Verpackung befreit, ohne daß er beim Aufschneiden der Verpackung berührt wird. Kratzer oder Druckbelichtungen, die den Film u. U. unbrauchbar für seine Auswertung machen würden, sind somit ausgeschlossen. Der Transport des Filmes erfolgt dabei durch die Bewegung einer Verpackungsseite.

Mit der getrennten Sammlung von Verpackung und Folie werden zwei Vorteile erreicht, zum einen braucht die Folie für eine Wiederverwendung nicht mehr aus dem Verpackungsabfall mühselig aussortiert zu werden, und zum anderen, falls eine Wiederverwendung nicht beabsichtigt ist, kann verhindert werden, daß die Blei enthaltende Folie als Umweltbelastung auf den Abfall kommt.

**Patentansprüche**

1. Vorrichtung zum Entnehmen eines Filmstreifens aus einer schlauchförmigen, flachen Verpackung, in welcher sich ggf. außerdem eine oder mehrere Folien in Größe des Filmstreifens befinden, gekennzeichnet durch zwei jeweils zwischen Film (6c) und einer Verpackungsseite (6a) eingreifbare Führungszungen (7, 8), eine die Verpackung (6) mit Inhalt fortbewegende Transporteinrichtung (14, 16) und eine die Verpackung (6) während des Transports aufschlitzende Schneideinrichtung (9).

2. Vorrichtung nach Anspruch 1, dadurch gekennzeichnet, daß die Schneideinrichtung (9) mindestens ein Schneidmesser (9a bis 9c) aufweist, das schräg zur Transportrichtung der Verpackung angeordnet ist.

3. Vorrichtung nach Anspruch 1 oder 2, dadurch gekennzeichnet, daß an einer Führungszunge (7) zwei mit in einem Winkel gegen die Transportrichtung gerichteter Schneide ausgebildete Messer (9a ; 9b) in einem Abstand zueinander angeordnet sind, der der Breite der Verpackung entspricht.

4. Vorrichtung nach einem der Ansprüche 1 oder 2, dadurch gekennzeichnet, daß zum Aufschlitzen der einen Seite der Verpackung (6) ein Messer (9a) auf der Unterseite der Führungszunge (7) in Höhe des Arbeitstisches (1) angeordnet ist und zum Schneiden der anderen Verpackungsseite mehrere Messer (9b, 9c) versetzt auf der sich stufenförmig erweiternden Führungszunge (7) für unterschiedliche Formatbreiten vorgesehen sind.

5. Vorrichtung nach einem der Ansprüche 1 bis 4, dadurch gekennzeichnet, daß die Messer (9a bis 9c) einen Winkel von 30 bis 50, vorzugsweise 35 bis 45° zur Transportrichtung der Verpackung (6) einnehmen.

6. Vorrichtung nach einem der Ansprüche 1 bis 5, dadurch gekennzeichnet, daß die Transporteinrichtung ein an einer aufgeschlitzten Verpackungsseite angreifendes Rollenpaar (14, 16) ist.

7. Vorrichtung nach einem der Ansprüche 1 bis 6, dadurch gekennzeichnet, daß sich an die Führungszungen (7, 8) gebogene Führungselemente (10 bzw. 11) zum Abführen der aufgeschlitzten Verpackungsseiten (6a) anschließen.

8. Vorrichtung nach einem der Ansprüche 1 bis 7, gekennzeichnet durch einen Aufwickelteil (23 bis 25) für den freigelegten Film (6c), dessen Antrieb mit einer Geschwindigkeitssteuerung (26 bis 28, 32) in Verbindung steht.

9. Vorrichtung nach Anspruch 8, dadurch gekennzeichnet, daß die Transportgeschwindigkeit durch das Rollenpaar (14, 16) mit der Aufwickelgeschwindigkeit des Aufwickelteils (23 bis 25) synchronisiert ist, wobei mit größer werdendem Winkel die Geschwindigkeitssteuerung (26 bis 28, 32) den Antrieb des Aufwickelteils (23 bis 25) herabsetzt.

10. Vorrichtung nach Anspruch 8 oder 9, dadurch gekennzeichnet, daß für ggf. vorhandene Folien (6b) zwischen den Führungselementen (10, 11) und dem Aufwickelteil (23 bis 25) Führungswände (20) und Aufnahmen (21) für die Folien (6b) vorgesehen sind, wobei die Folien mit dem Film (6c) zwischen den Führungszungen (7, 8) durchgeführt sind.

**Claims**

1. Apparatus for removing a strip of film from a tubular, flat packing in which there are possibly, in addition, one or more foils of the same size as the strip of film, characterised by two guiding tongues (7, 8), each of which can intervene between the film (6c) and one side of the packing (6a), a transporting device (14, 16) which advances the packing (6) with its contents and a cutting device (9) which slits open the packing (6) during transportation.

2. Apparatus according to Claim 1, characterised in that the cutting device (9) has at least one cutting blade (9a to 9c) which is arranged at an angle to the direction of transport of the packing.

3. Apparatus according to Claim 1 or 2, characterised in that on one guiding tongue (7) two blades (9a ; 9b) having cutting edges directed, at an angle, in an opposite direction to the direction of transport, are arranged at a distance from each other which corresponds to the width of the packing.

4. Apparatus according to one of Claims 1 or 2, characterised in that one blade (9a) is arranged on the lower side of the guiding tongue (7) at the same level as the worktable (1) for slitting open the one side of the packing (6) and, for cutting the other side of the packing, several blades (9b, 9c) for various size widths are provided in a staggered manner on the guiding tongue (7) which widens by way of steps.

5. Apparatus according to one of Claims 1 to 4, characterised in that the blades (9a to 9c) are arranged at an angle of 30 to 50, preferably 35 to 45° to the direction of transport of the packing (6).

6. Apparatus according to one of Claims 1 to 5, characterised in that the transporting device is a pair of rollers (14, 16) which grips one slit-open side of the packing.

7. Apparatus according to one of Claims 1 to 6, characterised in that curved guiding elements (10 and 11) follow on from the guiding tongues (7, 8) for removing the slit-open packing sides (6a).

8. Apparatus according to one of Claims 1 to 7, characterised by a take-up section (23 to 25) for the bare film (6c), the drive of which is connected to a speed control arrangement (26 to 28, 32).

9. Apparatus according to Claim 8, characterised in that the speed of transportation by the pair of rollers (14, 16) is synchronised with the take-up speed of the take-up section (23 to 25), the speed control arrangement (26 to 28, 32) reducing the drive of the take-up section (23 to 25) as the amount of film wound on increases.

10. Apparatus according to Claim 8 or 9, characterised in that guiding walls (20) and receptacles (21) are provided between the guiding elements (10, 11) and the take-up section (23 to 25) for any foils (6b) which may be present, the foils being passed together with the film (6c) between the guiding tongues (7, 8).

## Revendications

1. Dispositif pour extraire une bande de film d'un emballage tubulaire aplati, dans lequel il peut y avoir également une ou plusieurs feuilles de la taille de la bande de film, caractérisé par deux languettes de guidage (7, 8) s'insérant respectivement entre le film (6c) et un côté (6a) de l'emballage, par un mécanisme d'entraînement (14, 16) faisant avancer l'emballage (6) avec son contenu et par un mécanisme de découpe (9) sectionnant l'emballage (6) durant l'entraînement.

2. Dispositif selon la revendication 1, caractérisé par le fait que le mécanisme de découpe (9) comporte au minimum un coupoir (9a à 9c) disposé obliquement par rapport à la direction d'entraînement de l'emballage.

3. Dispositif selon la revendication 1 ou 2, caractérisé par le fait que sur une languette de guidage (7) sont placés deux coupoirs (9a ; 9b), constitués par un couteau incliné par rapport à la direction d'entraînement, à une distance l'un de l'autre qui correspond à la largeur de l'emballage.

4. Dispositif selon l'une des revendications 1 ou 2, caractérisé par le fait que, sur la face inférieure de la languette de guidage (7) à hauteur du banc de travail (1), un coupoir (9a) est placé pour sectionner l'un des côtés de l'emballage (6) et que pour couper l'autre côté de l'emballage sont prévus plusieurs coupoirs (9b, 9c), décalés sur la languette de guidage (7) s'élargissant en échelon, pour les différents formats.

5. Dispositif selon l'une des revendications 1 à 4, caractérisé par le fait que les coupoirs (9a à 9c) sont inclinés de 30 à 50, de préférence de 35 à 45°, par rapport à la direction d'entraînement de l'emballage (6).

6. Dispositif selon l'une des revendications 1 à 5, caractérisé par le fait que le mécanisme d'entraînement est constitué par un couple de rouleaux (14, 16) entrant en contact avec un côté de l'emballage sectionné.

7. Dispositif selon l'une des revendications 1 à 6, caractérisé par le fait que des éléments de guidage (10 et 11) recourbés se raccordent aux languettes de guidage (7, 8) pour évacuer les côtés (6a) sectionnés de l'emballage.

8. Dispositif selon l'une des revendications 1 à 7, caractérisé par un élément d'enroulement (23 à 25) pour le film dégagé (6c), dont l'entraînement est relié à une commande de vitesse (26 à 28, 32).

9. Dispositif selon la revendication 8, caractérisé par le fait que la vitesse d'entraînement est synchronisée par le couple de rouleaux (14, 16) avec la vitesse d'enroulement de l'élément d'enroulement (23 à 25), de sorte que la commande de vitesse (26 à 28, 32) avec l'utilisation d'un plus grand angle ralentit l'entraînement de l'élément d'enroulement (23 à 25).

10. Dispositif selon la revendication 8 ou 9 ; caractérisé par le fait que, pour les éventuelles feuilles (6b), des parois de guidage (20) et des logements (21) sont prévus entre les éléments de guidage (10, 11) et l'élément d'enroulement (23 à 25), de sorte que les feuilles sont acheminées avec le film (6c) entre les languettes de guidage (7, 8).

Fig.1

Fig.2

Fig.3